(19) Europäisches Patentamt
European Patent Office
Office européen des brevets

(11) **EP 2 309 454 B1**

(12) **EUROPEAN PATENT SPECIFICATION**

(45) Date of publication and mention
of the grant of the patent:
**30.03.2016 Bulletin 2016/13**

(51) Int Cl.:
***G06T 7/00*** *(2006.01)*      ***G06T 7/20*** *(2006.01)*

(21) Application number: **10166150.2**

(22) Date of filing: **16.06.2010**

(54) **Apparatus and method for detecting motion**

Vorrichtung und Verfahren zur Bewegungserkennung

Appareil et procédé de détection de mouvement

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **18.09.2009 KR 20090088633**

(43) Date of publication of application:
**13.04.2011 Bulletin 2011/15**

(73) Proprietor: **Samsung Electronics Co., Ltd.**
**Suwon-si, Gyeonggi-do, 443-742 (KR)**

(72) Inventors:
• **Cho, Joon-Kee**
**Gyeonggi-do (KR)**
• **Kim, Yeon-Ho**
**Gyeonggi-do (KR)**

(74) Representative: **Greene, Simon Kenneth**
**Elkington and Fife LLP**
**Prospect House**
**8 Pembroke Road**
**Sevenoaks, Kent TN13 1XR (GB)**

(56) References cited:
• HONGMO JE ET AL: "Hand Gesture Recognition To Understand Musical Conducting Action", ROBOT AND HUMAN INTERACTIVE COMMUNICATION, 2007. RO-MAN 2007. THE 16TH IEEE INTERNATIONAL SYMPOSIUM ON, IEEE, PI, 26 August 2007 (2007-08-26), pages 163-168, XP031224907, ISBN: 978-1-4244-1634-9
• IG-JAE KIM ET AL: "3D tracking of multi-objects using color and stereo for HCI", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 3, 7 October 2001 (2001-10-07), pages 278-281, XP010563337, DOI: 10.1109/ICIP.2001.958105 ISBN: 978-0-7803-6725-8
• SEOK-JU HONG ET AL: "Gesture Recognition Based on Context Awareness for Human-Robot Interaction", 1 January 2006 (2006-01-01), ADVANCES IN ARTIFICIAL REALITY AND TELE-EXISTENCE LECTURE NOTES IN COMPUTER SCIENCE;;LNCS, SPRINGER, BERLIN, DE, PAGE(S) 1 - 10, XP019051853, ISBN: 978-3-540-49776-9 * page 3, lines 14-24 * * sections "4.1 Feature Extraction: Active Plane Model", "4.2 Pose Symbolization Using PCA", "4.3 Symbolic Gesture Recognition Using HMM" * * figure 2 *

EP 2 309 454 B1

**Description**

BACKGROUND OF THE INVENTION

One or more embodiments relate to detecting and recognizing motion of a person.

A service providing system provides services desired by a user by recognizing presence and location of the user and a direction or type of motion of the user, which contributes to more convenient use of the system.

Examples of such a system include a secure entrance control system that recognizes a face of a visitor to the secure entrance, a notebook computer with a camera that senses a face of a user for log-in, and a camera that detects a face to capture a smile.

Recently, the motion of a user has also been detected using image information acquired from a camera mounted in a system.

In this case, motion of the user is recognized by calculating an optical flow obtained by detecting feature points from an image and tracking locations of the feature points.

This technology may be applied when a background image for the user is relatively simple or stationary, but not when the background image includes the same iterative patterns or a moving image (e.g., a television screen).

A method of hand gesture recognition is taught in "Hand Gesture Recognition to Understand Musical Conducting Action, 16th IEEE International Conference on Robot and Human Interactive Communication, August 26-29 2007, Jeju, Republic of Korea, pages 163 to 168. Candidate locations for hands are determined as regions having a smaller distance than a face detected by facial recognition.

SUMMARY OF THE INVENTION

According to one or more embodiments, there is provided an apparatus for detecting a motion, according to claim 1.

The object image acquiring unit includes a first image acquiring unit, a second image acquiring unit, a facial area detecting unit detecting a facial area from the image obtained from the first image acquiring unit or the second image acquiring unit, a distance image acquiring unit acquiring a distance image from the images obtained from the first image acquiring unit and the second image acquiring unit, a mask creating unit creating an image mask using the detected facial area and the acquired distance image, and an image filtering unit producing the object image from the image obtained from the first image acquiring unit or the second image using the created image mask.

The motion detection area may be set around a face of the object. The image change amount may be defined as an optical flow between the images, or a location of a feature point or a distance change amount.

According to one or more embodiments, there is provided a method of detecting a motion, according to claim 4.

Additional aspects, features, and/or advantages of embodiments will be set forth in part in the description which follows and, in part, will be apparent from the description, or may be learned by practice of the disclosure.

BRIEF DESCRIPTION OF THE DRAWINGS

These and/or other aspects and advantages will become apparent and more readily appreciated from the following description of embodiments, taken in conjunction with the accompanying drawings of which:

FIG. 1 illustrates a distance image, according to one or more embodiments;
FIG. 2 illustrates an acquiring of a distance image, according to one or more embodiments;
FIG. 3 is a block diagram of a motion detection apparatus, according to one or more embodiments;
FIG. 4 is a block diagram of an object image acquiring unit, according to one or more embodiments;
FIG. 5 is a block diagram of an object image acquiring unit, according to one or more embodiments;
FIG. 6 illustrates an operation of a motion detection method, according to a comparative example
FIG. 7 illustrates an operation of a motion detection method, according to one or more embodiments; and
FIG. 8 is a flowchart illustrating a motion detection method, according to one or more embodiments.

DETAILED DESCRIPTION

Reference will now be made in detail to embodiments, examples of which are illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.

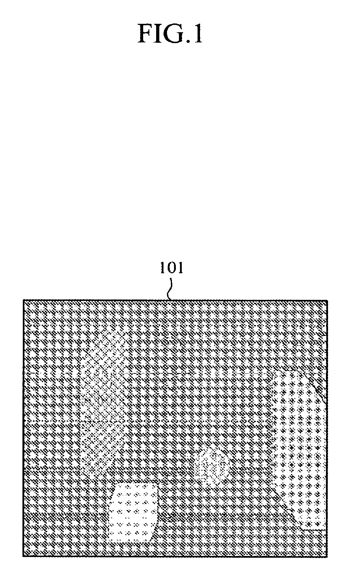

FIG. 1 illustrates a distance image, according to one or more embodiments.

In FIG. 1, the distance image 101 may be defined as an image in which respective points are represented by distance information. In the distance image 101, the distance information may be represented by colors or different shades of gray. For example, the respective points of the distance image 101 may be represented by colors or different shades of gray having different brightness depending on distances.

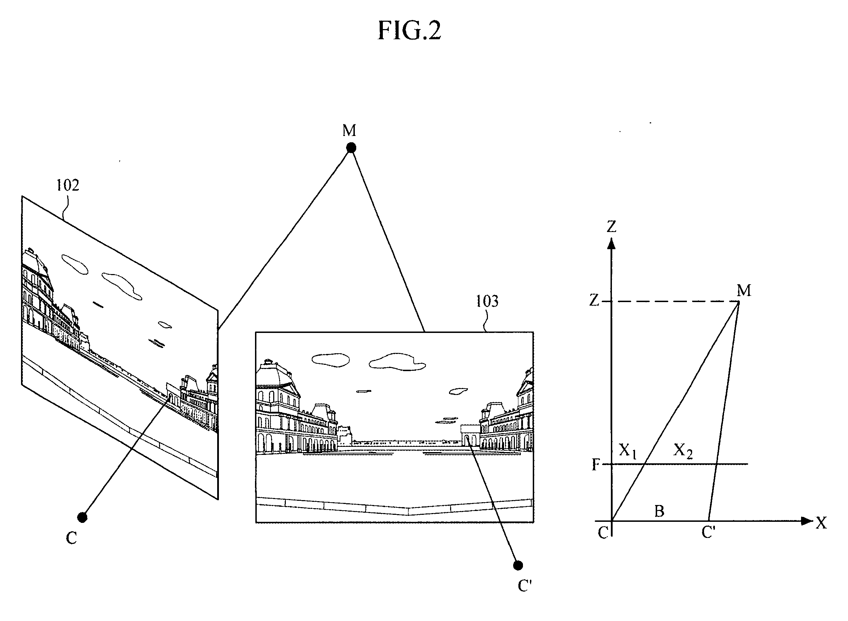

FIG. 2 illustrates an acquiring of a distance image, according to one or more embodiments. In FIG. 2, the distance image may be obtained from first and second images 102 and 103, respectively acquired by left and right cameras of a stereo camera, for example. The stereo camera may have the left and right camera combined as in eyes of a person. For example, the left camera may be located at point C and the right camera may be located at point C'. In this case, a distance from the first image 102 or the second image 103 to a specific point M may be obtained by the below Equation 1, for example.

Equation 1:

$$z = (B/d) * F$$

In Equation 1, with regards to FIG. 2, z denotes the distance from the image to point M, B denotes a distance between point C and point C', d denotes a difference between location coordinates of point M in the respective images (i.e., a difference between $X_1$ and $X_2$), and F denotes a focal length of a camera lens. B may be a constant or a measured value, d may be obtained using a sum of squared difference (SSD) scheme, and F may depend on the camera lens, as only examples. Based on the values, the distances z from each image to the specific point can be obtained.

Thus, the two images 102 and 103 may be acquired by the stereo camera, the distances of the respective points of the images are calculated, and the points are represented by different colors or shades of gray according to the distances, and thus a distance image such as shown in FIG. 1 can be acquired.

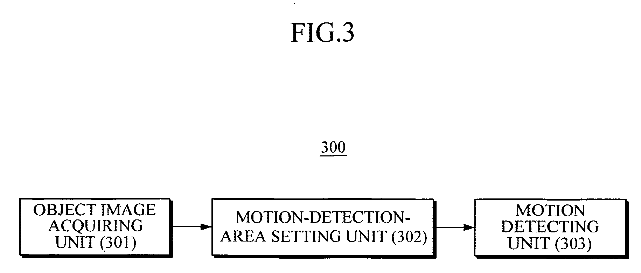

FIG. 3 illustrates a motion detection apparatus, according to one or more embodiments.

In FIG. 3, a motion detection apparatus 100 may include an object image acquiring unit 301, a motion-detection-area setting unit 302, and a motion detecting unit 303, for example.

The object image acquiring unit 301 may acquire an object image that is an image including only the object without a background, using distance information for an object included in images obtained from at least two cameras.

In an embodiment, the object image may include only an object by removing a background from any image including the background and the object. The object image may be acquired through facial area information and a distance image obtained based on the respective images obtained from the stereo camera, for example. In an embodiment, the object image may be obtained continuously at certain time intervals by the object image acquiring unit 301. That is, in such an embodiment, a first object image may be acquired at time to and a second object image may be obtained at time $t_1$.

The motion-detection-area setting unit 302 sets a motion detection area in the acquired object image. The motion detection area may be a reference area for recognizing an amount of an image change between the first object image and the second object image. The motion detection area may be formed around a face in each object image, for example.

The motion detecting unit 303 recognizes an amount of an image change between the acquired object images to detect a motion of an object. For example, the motion detecting unit 303 may detect the motion of the object based on the image change amount in the motion detection area set in each of the first and second object images. In this case, the image change amount may be defined as an optical flow between images, a location of a specific feature point, or a distance change amount, for example.

The detected motion may include a type of the motion, such as a moving direction of a person's hand. The motion detection apparatus 300 may further include a motion controller generating a predetermined control command according to the motion detected by the motion detecting unit 303.

Thus, since the motion detection apparatus 300, according to an embodiment, acquires the first and second object images including only the object without a background at certain time intervals, sets the motion detection area around the face of each object image, and detects the motion of the object through the image change amount in the motion detection area, the motion detection apparatus 300 can detect the motion of the object with a limited amount of computation irrespective of a change of the background.

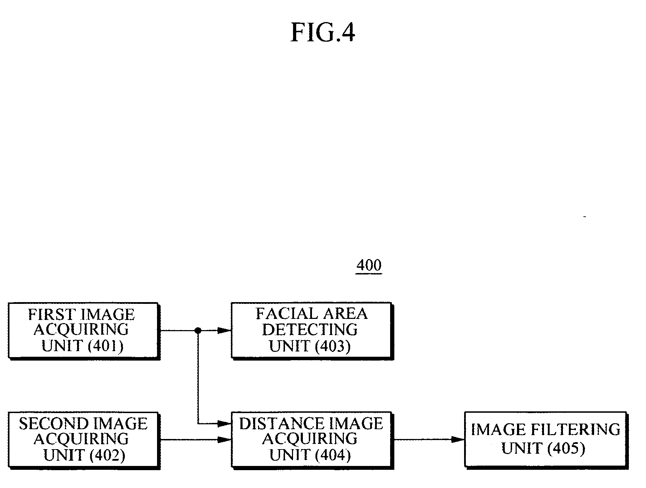

FIG. 4 is a block diagram of an object image acquiring unit, according to one or more embodiments.

Referring to FIG. 4, an object image acquiring unit 400 may include a first image acquiring unit 401, a second image acquiring unit 402, a facial area detecting unit 403, a distance image acquiring unit 404, and an image filtering unit 405, for example.

The first image acquiring unit 401 and the second image acquiring unit 402 may be a stereo camera that simultaneously photographs the same area. For example, the first image acquiring unit 401 may be a left camera of a stereo camera and the second image acquiring unit may be a right camera of the stereo camera, both being spaced a predetermined distance apart. For convenience of illustration, an image obtained by the first image acquiring unit 401 is referred to as an L image and an image obtained by the second image acquiring unit 402 is referred to as an R image.

The facial area detecting unit 403 detects a facial area from the L image. A variety of face detection algorithms, such as a boosted cascade scheme for a feature point, may be employed. For example, the facial area detecting unit 403 can detect the facial area by scanning a predetermined search window in the L image.

The distance image acquiring unit 404 may acquire a distance image using the L and R images. Here, the definition and acquisition of the distance image may be similar to the above descriptions of FIGS. 1 and 2.

The image filtering unit 405 may produce the above-described object image using the facial area detected by the facial area detecting unit 403 and the distance image acquired by the distance image acquiring unit 404. For example, the image filtering unit 405 may identify an area in the distance image corresponding to the detected facial area, calculate a distance to the object using the distance information of the distance image corresponding to the facial area, and then remove a portion corresponding to the background other than the object. If the calculated distance to the object is d, a distance image consisting of distances greater than d-th and smaller than d+th may be used as the object image. Here, the thresholds d-th and d+th denote previously determined threshold values.

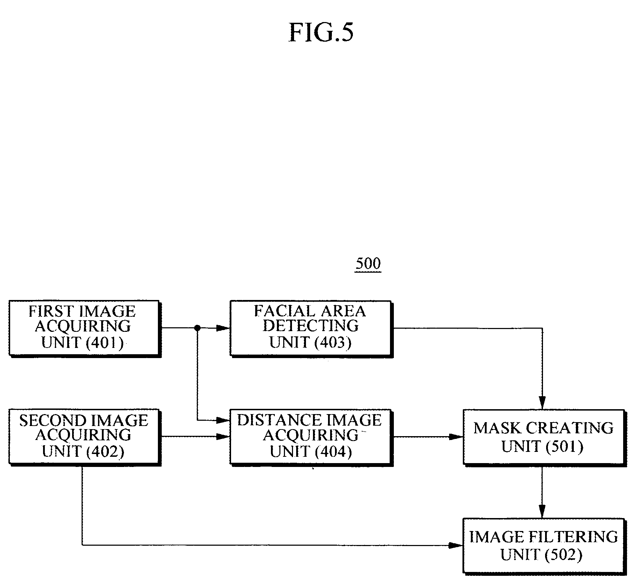

FIG. 5 is a block diagram of an object image acquiring unit, according to one or more embodiments.

In FIG. 5, an object image acquiring unit 500 may include a first image acquiring unit 401, a second image acquiring unit 402, a facial area detecting unit 403, a distance image acquiring unit 404, a mask creating unit 501, and an image filtering unit 502, for example.

The first image acquiring unit 401, the second image acquiring unit 402, the facial area detecting unit 403, and the distance image acquiring unit 404 may be similar to those illustrated in FIG. 4, and accordingly further discussion will not be set forth.

The mask creating unit 501 creates a filtering mask using a facial area detected by the facial area detecting unit 403 and a distance image acquired by the distance image acquiring unit 404. The mask creating unit 501 identifies an area in the distance image corresponding to the detected facial area, calculate the distance to the object using the distance information of the distance image corresponding to the facial area, and then remove a portion corresponding to the background other than the object. If the calculated distance to the object is d, a portion corresponding to a distance greater than d-th and smaller than d+th may be set to 1 and other portions are set to 0 to create the filtering mask. Here, again, the thresholds d-th and d+th denote previously determined threshold values.

The image filtering unit 502 may mask the R image with the created filtering mask to produce the above-described object image.

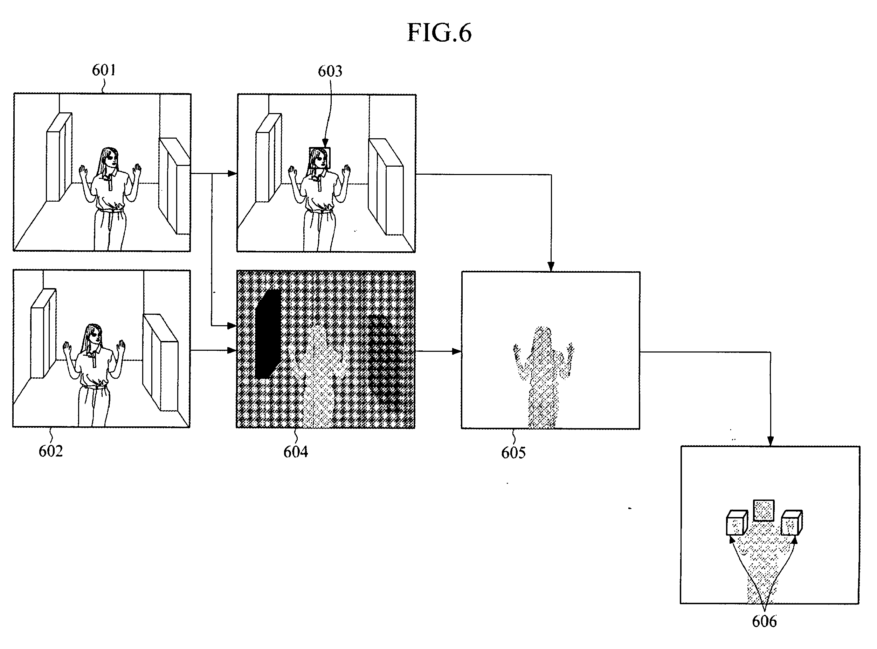

FIG. 6 illustrates an operation of a motion detection method, according to a comparative example.

Referring to FIG. 6, the first image acquiring unit 401 and the second image acquiring unit 402 acquire an L image 601 and an R image 602, respectively. In this case, the L image 601 and R image 602 may include both an object and a background.

The facial area detecting unit 403 may detect a facial area 603 from the L image 601.

The distance image acquiring unit 404 may acquire a distance image 604 using the L image 601 and the R image 602.

The image filtering unit 405 may further acquire an object image 605 using distance information of the distance image 604 corresponding to the facial area 603.

When the object image 605 has been acquired, the motion-detection-area setting unit 302 may set a motion detection area 606 in the object image 605. In this case, the motion detection area may be set around a face of the object in the object image 605.

The acquisition of the object image 605 and the setting of the motion detection area 606 may be continuously performed at certain time intervals. That is, through the above-described process, in an embodiment, a first object image with the motion detection area may be acquired at time to, and then a second object image with the motion detection area acquired at time $t_1$.

Thus, here, the motion detecting unit 303 can detect the motion of the object through an amount of an image change in the motion detection area between the first object image and the second object image.

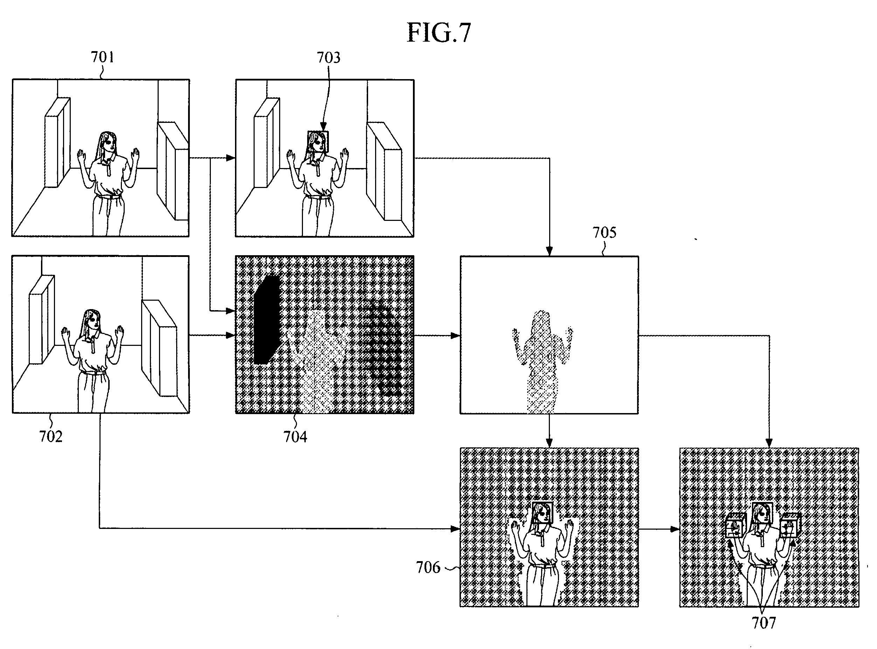

FIG. 7 illustrates an operation of a motion detection method, according to one or more embodiments.

Referring to FIG. 7, the first image acquiring unit 401 and the second image acquiring unit 402 may acquire an L image 701 and an R image 702, respectively. In this case, the L image 701 and R image 702 may include both an object and a background.

The facial area detecting unit 403 may detect a facial area 703 from the L image 701.

The distance image acquiring unit 404 may acquire a distance image 704 using the L image 701 and the R image 702.

The mask creating unit 501 may create an image mask 705 using distance information of the distance image 704 corresponding to the facial area 703. For example, the image mask 705 may be a filtering mask in which an area corresponding to the object is set to 1 and other areas are set to 0.

The image filtering unit 502 may further mask the R image 702 with the image mask 705 to produce an object image 706.

When the object image 706 has been acquired, the motion-detection-area setting unit 302 may set a motion detection area 707 in the object image 706. In this case, the motion detection area may be set around a face of the object in the object image 706, for example.

The acquisition of the object image 706 and the setting of the motion detection area 707 may be continuously performed at certain time intervals. That is, through the process as described above, in an embodiment, a first object image with the motion detection may be acquired at time to, and then a second object image with the motion detection area acquired at time $t_1$.

Thus, the motion detecting unit 303 can detect the motion of the object through an amount of an image change in the motion detection area between the first object image and the second object image.

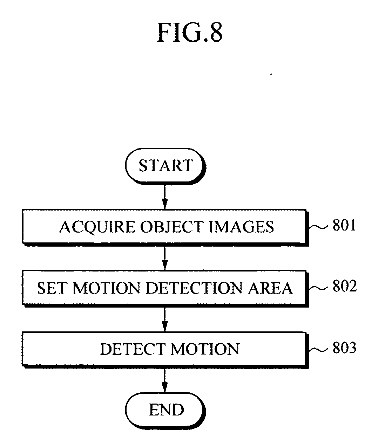

FIG. 8 is a flowchart illustrating a motion detecting method, according to one or more embodiments.

Referring to FIG. 8, first, an object image may be acquired (801). The object image may include only an object by removing a background from any image including the background and the object, and may be obtained through the configuration as shown in FIG. 4 or 5, for example.

A motion detection area may be set in the object image (802). The motion detection area may be a reference area for recognizing an amount of an image change between the object images. For example, the motion detection area may be set around a face of the object image by the motion-detection-area setting unit 302.

The amount of the image change in the motion detection area between the object images may be detected to detect a motion of the object (803). For example, the motion detecting unit 303 can detect the motion of the object through an optical flow between the object images in the motion detection area, a location of a feature point, or a distance change amount, for example.

The detected motion may include a type of the motion. Accordingly, the method may further include generating a predetermined control command according to the type of the detected motion. Various functions of a system using the method of detecting a motion according to one or more embodiments may be controlled according to the control command generated according to the type of the detected motion, for example.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of computer readable code include both machine code, such as produced by a compiler, and files containing higher level code that may be executed by the computer using an interpreter, for example. The media may also be a distributed network, so that the computer readable code is stored and executed in a distributed fashion. Still further, as only an example, the processing element could include a processor or a computer processor, and processing elements may be distributed and/or included in a single device.

Also, one or more of the above-described embodiments may be applied to air conditioners that recognize a motion of an object to control a blowing direction, e.g., to control a blowing direction of cooled air toward an identified object or person.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments.

Thus, although a few embodiments have been shown and described, with additional embodiments being equally available, it would be appreciated by those skilled in the art that changes may be made in these embodiments without departing from the invention, the scope of which is defined in the claims.

## Claims

1. A motion detecting apparatus, comprising:

an object image acquiring unit (301) arranged to acquire plural object images based on images respectively obtained from at least two cameras, the acquired plural object images including the object without a background; a motion-detection-area setting unit (302) arranged to set respective motion detection areas in the acquired object images; and a motion detecting unit (303) arranged to detect a motion of the object based on a determined amount of an image change in the respective motion detection areas between the acquired object images; wherein the object image acquiring unit comprises:

a first image acquiring unit (401); a second image acquiring unit (402); a facial area detecting unit (403) arranged to detect a facial area from a first image obtained from the first image acquiring unit or a second image obtained from the second image acquiring unit; a distance image acquiring unit (404) arranged to acquire a distance image from first and second images; a mask creating unit (501) arranged to create an image mask by identifying an area in the distance image corresponding to the detected facial area, calculating a distance d to the object using the distance information of the distance image corresponding to the facial area and then removing a portion corresponding to the background other than the object; and an image filtering unit (502) arranged to produce an object image (705) by filtering the first image or second images based on the created image mask.

2. The apparatus of claim 1, wherein the respective motion detection areas are set around a face of the object.

3. The apparatus of any of claims 1 to 2, wherein the image change amount is defined as an optical flow between the images respectively obtained from the at least two cameras, or a location of a feature point or a distance change amount.

4. A method of detecting motion, comprising:

acquiring (801) plural object images based on respective images obtained from at least two cameras, the acquired plural object images including the object without a background; setting (802) respective motion detection areas in the acquired object images; and detecting (803) a motion of the object based on a determined amount of an image change in the respective motion detection areas between the acquired object images; wherein the acquiring of the object images comprises:

detecting a facial area from an image obtained from one of the at least two cameras; acquiring a distance image from the images obtained from the at least two cameras; creating an image mask using the detected facial area and the acquired distance image by identifying an area in the distance image corresponding to the detected facial area, calculating a distance d to the object using the distance information of the distance image corresponding to the facial area and then removing a portion corresponding to the background other than the object; and producing an object image from the image obtained by filtering the one of the at least two cameras using the created image mask.

## Patentansprüche

1. Bewegungserkennungsvorrichtung, umfassend:

eine Objektbildaufnahmeeinheit (301), die so angeordnet ist, dass sie mehrere Objektbilder auf der Grundlage von jeweils über mindestens zwei Kameras erfassten Bildern aufnimmt, wobei die mehreren aufgenommenen Objektbilder das Objekt ohne Hintergrund beinhalten; eine Einstelleinheit (302) für den Bewegungserkennungsbereich, die so angeordnet ist, dass sie entsprechende Bewegungserkennungsbereich in den aufgenommenen Objektbildern einstellt; und

eine Bewegungserkennungseinheit (303), die so angeordnet ist, dass sie eine Bewegung des Objekts auf der Grundlage eines festgestellten Bildänderungswerts in den entsprechenden Bewegungserkennungsbereichen zwischen den aufgenommenen Objektbildern erkennt;

wobei die Objektbildaufnahmeeinheit Folgendes umfasst:

eine erste Bildaufnahmeeinheit (401);

eine zweite Bildaufnahmeeinheit (402);

eine Gesichtsbereichserkennungseinheit (403), die so angeordnet ist, dass sie einen Gesichtsbereich aus einem mit der ersten Bildaufnahmeeinheit erfassten Bild oder einem mit der zweiten Bildaufnahmeeinheit erfassten Bild erkennt;

eine Abstandsbilderfassungseinheit (404), die so angeordnet ist, dass sie ein Abstandsbild aus dem ersten und zweiten Bild erfasst;

eine Maskenerstellungseinheit (501), die so angeordnet ist, dass sie eine Bildmaske durch Identifizieren eines Bereichs in dem Abstandsbild, der dem erkannten Gesichtsbereich entspricht, Berechnen eines Abstands d zu dem Objekt mithilfe der Abstandsinformationen des Abstandsbilds, die dem Gesichtsbereich entsprechen, und anschließend Entfernen eines Teils, der dem Hintergrund mit Ausnahme des Objekts entspricht, erstellt; und

eine Bildfiltereinheit (502), die so angeordnet ist, dass sie ein Objektbild (705) durch Filtern des ersten Bildes oder zweiten Bildes auf der Grundlage der erstellen Bildmaske erzeugt.

2. Vorrichtung nach Anspruch 1, wobei die entsprechenden Bewegungserkennungsbereiche um ein Gesicht des Objekts herum eingestellt sind.

3. Vorrichtung nach einem der Ansprüche 1 bis 2, wobei der Bildänderungswert als optischer Fluss zwischen den Bildern, die jeweils von den mindestens zwei Kameras erfasst wurden, oder Position eines Merkmalspunkts oder Abstandsänderungswert definiert ist.

4. Verfahren zur Bewegungserkennung, das Folgendes umfasst:

Aufnehmen (801) mehrerer Objektbilder auf der Grundlage von jeweiligen Bildern, die von mindestens zwei Kameras erfasst werden, wobei die mehreren aufgenommenen Objektbilder das Objekt ohne einen Hintergrund beinhalten;

Einstellen (802) entsprechender Bewegungserkennungsbereiche in den aufgenommenen Objektbildern; und

Erkennen (803) einer Bewegung des Objekts auf der Grundlage eines festgestellten Werts einer Bildänderung in den entsprechenden Bewegungserkennungsbereichen zwischen den aufgenommenen Objektbildern;

wobei das Aufnehmen der Objektbilder Folgendes umfasst:

Erkennen eines Gesichtsbereichs aus einem Bild, das von einer der mindestens zwei Kameras erfasst wurde;

Aufnehmen eines Abstandsbildes aus den Bildern, die von den mindestens zwei Kameras erfasst wurden;

Erstellen einer Bildmaske unter Verwendung des erkannten Gesichtsbereichs und des aufgenommenen Abstandsbilds durch Identifizieren eines Bereichs in dem Abstandsbild, der dem erkannten Gesichtsbereich entspricht, Berechnen eines Abstands d zu dem Objekt mithilfe der Abstandsinformationen des Abstandsbilds, die dem Gesichtsbereich entsprechen, und anschließend Entfernen eines Teils, der dem Hintergrund mit Ausnahme des Objekts entspricht; und

Erzeugen eines Objektbildes aus dem erfassten Bild durch Filtern der einen der mindestens zwei Kameras mithilfe der erstellten Bildmaske.

## Revendications

1. Un appareil de détection de mouvement, comprenant :

un dispositif de saisie d'images d'objets (301) disposé de façon à saisir plusieurs images d'objets sur la base d'images obtenues respectivement d'au moins deux caméras, les plusieurs images d'objets saisies comprenant l'objet sans arrière-plan ;

un dispositif de réglage de zone de détection de mouvements (302) agencé pour établir des zones respectives de détection de mouvements dans les images d'objet saisies ; et

un dispositif de détection de mouvement (303) agencé pour détecter un mouvement de l'objet sur la base d'une quantité déterminée de variation de l'image dans les zones respectives de détection de mouvements entre les images d'objet saisies ;

le dispositif de saisie d'images d'objets comprenant :

un premier dispositif de saisie d'images (401) ;

un deuxième dispositif de saisie d'images (402) ;

un dispositif de détection de zone du visage (403) agencé pour détecter une zone de visage d'après une première image obtenue du premier dispositif de saisie d'images ou une deuxième image du deuxième dispositif de saisie d'images ;

un dispositif de saisie d'image de distance (404) agencé pour saisir une image de la distance entre la première et la deuxième image ;

un dispositif de création de masque (501) agencé pour créer un masque d'image en identifiant une zone dans l'image de distance correspondant à la zone de visage détectée, en calculant une distance d jusqu'à l'objet à l'aide des informations sur la distance de l'image de la distance correspondant à la zone du visage, puis en enlevant une partie correspondant à l'arrière-plan autre que l'objet ; et

une image du dispositif de filtrage (502) agencée pour produire une image d'objet (705) en filtrant la première image ou des deuxièmes images basées sur le masque d'image créé.

2. L'appareil selon la revendication 1, les zones respectives de détection de mouvements étant placées autour d'une face de l'objet.

3. L'appareil selon une quelconque des revendications 1 à 2, la quantité de changement d'image étant définie comme étant un flux optique entre les images obtenues respectivement des caméras au nombre minimum de deux, ou d'un lieu d'un point clé, ou de la quantité de variation de distance.

4. Une méthode de détection de mouvement, comprenant :

la saisie (801) de plusieurs images d'objets sur la base d'images respectives obtenues d'au moins deux caméras, les plusieurs images d'objets saisies comprenant l'objet sans arrière-plan ;

l'établissement (802) de zones respectives de détection de mouvements dans les images d'objet saisies ; et

la détection (803) d'un mouvement de l'objet basée sur une quantité déterminée de variation de l'image dans les zones respectives de détection de mouvements entre les images d'objet saisies ;

la saisie des images d'objet comprenant :

la détection d'une zone de visage d'après une image obtenue d'une des caméras au nombre d'au moins deux ;

la saisie d'une image de distance d'après les images obtenues desdites caméras au nombre d'au moins deux ;

la création d'une image de masque à l'aide de la zone du visage détectée et de l'image de la distance saisie, en identifiant une zone dans l'image de distance correspondant à la zone du visage détectée, en calculant une distance d jusqu'à l'objet à l'aide des informations sur la distance de l'image correspondant à la zone du visage, puis en enlevant une partie correspondant à l'arrière-plan autre que l'objet ; et

la production d'une image d'objet d'après l'image obtenue en filtrant l'une des caméras au nombre d'au moins deux à l'aide du masque d'image créé.

# FIG.1

101

# FIG.2

EP 2 309 454 B1

# FIG.3

300

| OBJECT IMAGE ACQUIRING UNIT (301) | → | MOTION-DETECTION-AREA SETTING UNIT (302) | → | MOTION DETECTING UNIT (303) |

# FIG.4

400

```
┌─────────────────┐              ┌─────────────────┐
│  FIRST IMAGE    │              │  FACIAL AREA    │
│  ACQUIRING      │─────●───────▶│  DETECTING      │
│  UNIT (401)     │     │        │  UNIT (403)     │
└─────────────────┘     │        └─────────────────┘
                        │
┌─────────────────┐     │        ┌─────────────────┐        ┌──────────────────┐
│  SECOND IMAGE   │     └───────▶│ DISTANCE IMAGE  │        │ IMAGE FILTERING  │
│  ACQUIRING      │─────────────▶│  ACQUIRING      │───────▶│  UNIT (405)      │
│  UNIT (402)     │              │  UNIT (404)     │        │                  │
└─────────────────┘              └─────────────────┘        └──────────────────┘
```

# FIG.5

500

```
┌─────────────────┐        ┌─────────────────┐
│   FIRST IMAGE   │        │   FACIAL AREA   │
│    ACQUIRING    │───●───→│    DETECTING    │───────────┐
│   UNIT (401)    │    │    │   UNIT (403)    │           │
└─────────────────┘    │    └─────────────────┘           │
                       │                                  ▼
┌─────────────────┐    │    ┌─────────────────┐    ┌─────────────────┐
│  SECOND IMAGE   │    │    │ DISTANCE IMAGE  │    │  MASK CREATING  │
│    ACQUIRING    │───→│───→│    ACQUIRING    │───→│   UNIT (501)    │
│   UNIT (402)    │         │   UNIT (404)    │    └─────────────────┘
└─────────────────┘                                        │
         │                                                 ▼
         │                                        ┌─────────────────┐
         │                                        │ IMAGE FILTERING │
         └───────────────────────────────────────→│   UNIT (502)    │
                                                  └─────────────────┘
```

# FIG.6

EP 2 309 454 B1

EP 2 309 454 B1

# FIG.7

# FIG.8

```
        ┌─────────┐
        │  START  │
        └─────────┘
             │
             ▼
┌──────────────────────────────┐
│    ACQUIRE OBJECT IMAGES      │ ～ 801
└──────────────────────────────┘
             │
             ▼
┌──────────────────────────────┐
│   SET MOTION DETECTION AREA   │ ～ 802
└──────────────────────────────┘
             │
             ▼
┌──────────────────────────────┐
│        DETECT MOTION          │ ～ 803
└──────────────────────────────┘
             │
             ▼
        ┌─────────┐
        │   END   │
        └─────────┘
```

**REFERENCES CITED IN THE DESCRIPTION**

**Non-patent literature cited in the description**

- Hand Gesture Recognition to Understand Musical Conducting Action. *16th IEEE International Conference on Robot and Human Interactive Communication,* 26 August 2007, 163-168